# EUROPÄISCHE PATENTSCHRIFT

(11) **EP 1 238 034 B1**
(45) Veröffentlichungstag und Bekanntmachung des Hinweises auf die Patenterteilung: **10.12.2003**
(21) Anmeldenummer: 00972801.5
(22) Anmeldetag: 18.10.2000
(51) Int. Cl.: C09J 9/00

(54) **VERFAHREN ZUR ADHESIVEN TRENNUNG VON KLEBEVERBUNDEN**
METHOD FOR SEPARATING ADHESIVE BONDED COMPOSITES
PROCEDE POUR DESOLIDARISER DES ASSEMBLAGES COLLES, AVEC MAINTIEN D'ADHESIVITE

(30) Priorität: 27.10.1999 DE 19951599
(43) Veröffentlichungstag der Anmeldung: 11.09.2002
(73) Patentinhaber: Henkel Kommanditgesellschaft auf Aktien, 40589 Düsseldorf-Holthausen (DE)
(72) Erfinder: KIRSTEN, Christian, 40789 Monheim (DE)
(86) Internationale Anmeldenummer: EP0010267
(87) Internationale Veröffentlichungsnummer: WO01030932

(56) Entgegenhaltungen:
- DE-A- 3 501 490
- US-A- 3 620 875

## Beschreibung

Die vorliegende Erfindung betrifft ein Verfahren zur reversiblen Trennung von Klebeverbunden durch Anlegen elektro-magnetischer Wechselfelder an den Klebeverbund. Ein weiterer Gegenstand der vorliegenden Erfindung sind Primerzusammensetzungen, die durch elektro-magnetische Wechselfelder erwärmt werden können um eine gezielt adhesive Trennung von Klebeverbunden zu bewirken

In vielen Industriezweigen, insbesondere in der metallverarbeitenden Industrie wie z.B. der Fahrzeugindustrie, im Nutzfahrzeugbau sowie deren Zulieferindustrien oder auch bei der Herstellung von Maschinen und Haushaltsgeräten oder auch in der Bauindustrie werden zunehmend gleiche oder verschiedene metallische und nicht-metallische Substrate klebend bzw. abdichtend miteinander verbunden. Diese Art des Fügens von Bauteilen ersetzt in zunehmenden Maße die klassischen Fügeverfahren wie Nieten, Schrauben oder Schweißen, weil das Kleben/Abdichten eine Vielzahl von technologischen Vorteilen bietet. Im Gegensatz zu den traditionellen Fügeverfahren wie Schweißen, Nieten, Schrauben ist das Lösen und Separieren von geklebten Bauteilen bisher noch nicht befriedigend gelöst.

Die EP-A-735121 beschreibt einen Klebfolien-Abschnitt für eine rückstandsfreie und beschädigungslose und wieder lösbare Verklebung bestehend aus einer doppelseitig klebenden Klebefolie mit einem aus der Klebefolie herausragenden Anfasser, an dem durch Ziehen in Richtung der Verklebungsebene die Verklebung lösbar ist. Dieses Verfahren ist jedoch nur anwendbar, wenn die Klebstoffschicht der Klebefolie ein Haftklebstoff ist. Mit derartigen Klebeverbindungen lassen sich jedoch nur geringe Zug- bzw. Schälfestigkeiten erreichen, so daß dieses Verfahren nur zum Fixieren von kleinen Gegenständen wie Haken und dergleichen im Haushaltsbereich anwendbar ist.

Die DE-A-4230116 beschreibt eine Klebstoffzusammensetzung enthaltend eine Abmischung eines aliphatischen Polyols mit einem aromatischen Dianhydrid. Diese Klebstoffzusammensetzung ermöglicht ein Auflösen der Verklebung in wäßrig alkalischen Systemen, konkret genannt werden Sodatösungen oder Alkalitaugen. Es wird vorgeschlagen diese wäßrig alkalisch löslichen Klebstoffe zur rationellen Herstellung von Magnetteilen und anderen Kleinteilen zu verwenden, wobei der Klebstoff nur zur Herstellung von Hiffsklebungen bei der Materialbearbeitung verwendet werden soll. Sehr ähnliche Klebstoffe sind auch als Etikettierklebstoffe bekannt, die ein Ablösen der Etiketten im wäßrigen oder wäßrig alkalischen Milieu bei Getränkeflaschen und ähnlichen Gebinden erlauben.

Die DE-A-4328108 beschreibt einen Kleber für Bodenbeläge und ein Verfahren zum Lösen dieser verklebten Bodenbeläge mit Hilfe von Mikrowellenenergie. Dazu soll der Kleber elektrisch leitfähig sein und durch ein Mikrowellengerät erweichbar sein. Konkret vorgeschlagen werden lösungsmittelfreie Kontaktkleber auf Basis von (wäßrigen) Polymerdispersionen, die Kupferpulver oder Aluminiumpulver enthalten. Gemäß der Lehre dieser Schrift sollen die verklebten Bodenbelagsstücke zum Lösen der Klebeverbindung in ein Mikrowellengerät gelegt werden, damit die Klebeschicht erweicht werden kann, so daß man die Bodenbelagsstücke nach dem Erweichen der Kleberschicht manuell abziehen kann.

Die WO 94/12582 beschreibt einen Haftkleber auf der Basis einer Mischung aus einer wäßrigen Polymerdispersion und einem in einem organischen Lösungsmittel gelösten Klebstoff sowie Klebrigmachem und Verdickungsmitteln. Dieser Haftklebstoff hat in einem breiten Temperaturbereich eine konstante Klebkraft und ermöglicht das mechanische Trennen der Klebeverbindungen. Angegeben wird, daß sich diese Klebeverbindungen zum Verkleben von Dämm- und/oder Zierflächenteilen wie z.B. Damm-Materialien oder Kunststoff-Folien eignet.

Die DE-A-19526351 beschreibt ein Lösegel für Lacke, Farben und Kleber auf der Basis organischer Lösungsmittel unter Zusatz von Netz- Verdickungs- und anderen üblichen Mitteln. Als konkretes Anwendungsfeld werden die Verwendung als Abbeizmittel bei der Entschichtung von 2 K-Lacken genannt. Obwohl erwähnt wird, daß derartige Mischungen auch zum Einsatz bei 2 K-Klebem geeignet sei, fehlen jedwede konkreten Angaben zum Lösen derartiger Klebeverbindungen. In ähnlicher Weise beschreibt die WO 87/01724 eine Zusammensetzung zur Entfernung von ausgehärteten Polysulfiddichtstoffen oder Beschichtungen. Hierbei werden in einem Lösungsmittel oder Lösungsmittelgemisch bestehend aus Dimethylformamid oder Dimethylacetamid oder deren Mischung mit aromatischen Lösungsmitteln wie Toluol oder Xylol ein Alkalimetall- oder Amoniumthiolat auf der Basis von Alkyl- oder Phenylthiolaten gelöst und auf ausgehärtete Polysulfiddichtstoffe oder Beschichtungsmaterialien aufgetragen, um diese anschließend von ihren Substraten, wie z. B. Flugzeugtanks entfernen zu können. Angaben zum Lösen von Klebeverbindungen werden nicht gemacht.

In der Arbeit "Reversible Crosslinking in Epoxy Resins", Journal of Applied Polymer Science, 39, 1439 bis 1457 (1990) beschreiben V.R. Sastri und G.C. Tesoro Epoxyharze mit verschiedenen Epoxyäquivalenten, die mit 4,4'-Dithioanilin vernetzt sind. Dort wird vorgeschlagen, das vemetzte Harz zu 600 µm großen Teilchen zu malen. Dieses feingemahlene Pulver wird dann in einer Lösung aus Diglyme, Salzsäure und Tributylphosphin unter Rückfluß gekocht, bis das gemahlene Harz aufgelöst ist. Analoge Offenbarungen werden in der US-A-4,882,399 von den gleichen Autoren gemacht. Konkrete Angaben über lösbare Klebeverbindungen fehlen in beiden Dokumenten.

Die WO 99/07774 beschreibt Klebstoffe, bei denen zumindest eine Aufbaukomponente Di- oder Polysulfidbindungen enthält und die nach dem Aushärten durch Auftragen von Lösungen von Spaltungsagenzien auf der Basis von Mercaptoverbindungen wieder gelöst werden können. Dadurch wird es möglich, verklebte Bauteile auf chemischem Wege in der Klebfuge wieder zu trennen. Gemäß der Lehre dieser Schrift kann das Spaltungsagenz auch in einer bei Raumtemperatur inerten Form der Klebstoff-Formulierung zugemischt werden, wobei die Spaltung nach Aktivierung des Reagenzes bei erhöhter Temperatur erfolgen kann. Konkrete Ausbildungen dieser inerten Form des Spaltungsagenzes werden nicht genannt. Obwohl die Verwendung von lösungsmittelhaltigen Spaltungsagenzien es erlaubt, Klebeverbindungen wieder zu lösen, ist es wünschenswert, auf lösungsmittelhaltige Spaltungsagenzien verzichten zu können, da diese Vorgehensweise
* wegen der diffusionsbedingten Einwirkungszeit der Spaltungsagenzien sehr zeitraubend ist
* die Handhabung von lösungsmittelhaltigen Spaltungsagenzien aus Umweltschutzgründen vermieden werden sollte.

Die noch unveröffentlichte DE-19924138.4 beschreibt Klebstoffzusammensetzungen, in im Bindemittelsystem nanoskalige Teilchen mit ferromagnetischen, ferrimagnetischen, superparamagnetischen oder piezoelektrische Eigenschaften enthalten. Diese Klebstoffzusammensetzungen eignen sich dazu, für die Herstellung lösbarer Klebeverbindungen verwendet zu werden. Unter Einwirkung elektromagnetischer Strahlung lassen sich diese Klebstoffverbindungen so hoch erwärmen, daß die Klebeverbindung leicht lösbar ist. Nachteilig an dieser Vorgehensweise ist die Tatsache, daß die gesamte Klebstoffzusammensetzung die entsprechenden nanoskalige Teilchen in ausreichender Menge enthalten muß um die elektromagnetische Stahlung zu absorbieren und dadurch erwärmt zu werden.

Die DE-A-35 01 490 beschreibt eine in den Rahmen einer Autokarosserie eingeklebte Glasscheibe unter Verwendung eines elastomeren vemetzten Klebers. Diese Scheibe hat auf ihrer Oberfläche im Klebebereich einen mit Stromanschlüssen versehenen Leitstreifen, der auf seiner dem Kleber zugewandten Seite eine Trennschicht aus einem thermisch schmelzbaren Material wie Weichlot oder Thermoplast trägt. Zum Lösen der Klebeverbindung wird der Leitstreifen unter Strom gesetzt, er erwärmt sich, die Trennschicht schmilzt und die Scheibe läßt sich von der Karosserie lösen.

Die EP-A-0521825 beschreibt eine lösbare Klebeverbindung, bei weiche die miteinander verbundenen Teile mittels einer dazwischen eingebrachten Kleberaupe gefügt sind. Diese Kleberaupe enthält ein flächiges thermoplastisches Trennelement. Dieses thermoplastische Trennelement enthält intrinsisch leitfähige Polymere, elektrisch leitfähige Ruße, Graphit, Metallpulver, Metallfasern oder Metallnadeln, metallbeschichtete Füllstoffe, metallbeschichtete Mikroglaskugeln, metallbeschichtete Textilfasem oder Gemische dieser Materialien. Beim Erwärmen der Klebeverbindung durch Strom oder Strahlungszufuhr wird diese thermoplastische Trennschicht erweicht, so daß die miteinander verbundenen Anteile mechanisch voneinander getrennt werden können. Konkret schlägt die EP-A-521825 vor, derartige lösbare Klebeverbindungen bei der Direktverglasung im Fahrzeugbau einzusetzen.

Angesichts dieses Standes der Technik haben sich die Erfinder die Aufgabe gestellt, Klebstoffsysteme bereitzustellen, die ein möglichst effizientes Lösen von Klebeverbindungen ermöglichen sollte. Nach dem Verkleben der entsprechenden Substrate mit diesen Klebstoffsystemen sollte die Verklebung durch Anlegen elektromagnetischer Wechselfelder zum Lösen der Klebeverbindung erwärmt werden können.

Die Lösung der Aufgabe ist den Patentansprüchen zu entnehmen. Sie beruht im wesentlichen in der Bereitstellung von Primer-Zusammensetzungen, deren Bindemittel nanoskalige Teilchen mit ferromagnetischen, ferrimagnetischen, superparamagnetischen oder piezoelektrischen Eigenschaften enthalten.

Ein weiterer Gegenstand der vorliegenden Erfindung sind lösbare Klebeverbindungen, bei denen die kraftschlüssige Verbindung der miteinander verbundenen Teile durch einen Schichtenverbund aus einer Primerschicht und einer Klebstoffschicht bewirkt wird. Dabei ist zwischen der Klebstoffschicht und mindestens einer Substratschicht eine Primerschicht aufgebracht, deren Bindemittelmatrix nanoskalige Teilchen enthält.

Auf der Substrat-abgewandten Seite der Primerschicht kann dabei ein thermoplastischer Klebstoff oder auch ein duroplastischer Klebstoff aufgebracht sein.

Ein weiterer Gegenstand der vorliegenden Erfindung ist ein Verfahren zum Lösen von Klebeverbindungen mit Hilfe von elektrischen, magnetischen oder elektromagnetischen Wechselfeldem, wobei die Primerschicht nanoskalige Teilchen enthält, die unter Einfluß dieser Wechselfelder die Primerschicht erwärmen. Diese Erwärmung der Primerschicht dient dem Trennen der Klebeverbunde. Dabei dienen die nanoskaligen Teilchen als Füllstoffe mit "Signalempfänger"-Eigenschaft, so daß Energie in Form von elektromagnetischen Wechselfeldern gezielt in die Primerschicht eingetragen wird. Durch den Energieeintrag in die Primerschicht kommt es zu einer lokalen starken Temperaturerhöhung, wodurch ein reversibles Lösen des Klebeverbundes ermöglicht wird. Im Falle nicht-reaktiver, thermoplastischer Klebstoffsysteme bewirkt dieser Energieeintrag in den Primer ein Schmelzen des angrenzenden Klebstoffpolymers, im Falle reaktiver, d. h. vemetzter duroplastischer Klebstoffsysteme führt die Temperaturerhöhung zu einem thermischen Abbau der Grenzschicht des Polymeren und somit zu einem Bruch in der Klebefuge. In diesem Sinne sind besonders solche Klebstoffe zu bevorzugen, die entweder selbst thermisch labil sind, oder deren Polymerrückrat einzelne thermisch labile Gruppen aufweist. Auch die Modifizierung von Klebstoffen mit thermisch labilen Additiven, die infolge einer Temperaturerhöhung aktiviert werden können und so ein Klebeversagen initiieren, läßt sich erfolgreich für die erfindungsgemäßen lösbaren Klebeverbindungen verwenden. Gegenüber den herkömmlichen Erwärmungsmethoden zeichnet sich das erfindungsgemäße Verfahren dadurch aus, daß die Wärmeerzeugung lokal definiert in der Grenzschicht zwischen erwärmter Primerschicht und angrenzender Klebstoffschicht der Klebefuge geschieht und daß eine thermische Belastung der verklebten Substratmaterialien und der Klebstoffmatrix selbst vermieden bzw. minimiert wird. Das Verfahren ist sehr zeitsparend und effektiv, da die Wärme nicht durch Diffusionsvorgänge durch die verklebten Substrate hindurch in die Klebefuge eingebracht werden muß. Dieses Verfahren reduziert auch in erheblichem Maße Wärmeverluste durch Wärmeableitung bzw. Wärmestrahlung über das Substrat oder die Klebstoffmatrix, dadurch wird das erfindungsgemäße Verfahren besonders ökonomisch. Durch die lokal definierte Temperaturerhöhung innerhalb der Primerschicht wird der Klebstoff selektiv nur an der Grenzfläche Primer/Klebstoff zerstört, wodurch eine "quasi"-adhesive Substrattrennung ermöglicht wird.

Zur Energieeintragung eignen sich elektrische Wechselfelder oder magnetische Wechselfelder. Bei der Anwendung elektrischer Wechselfelder sind als Füllmaterialien alle piezoelektrischen Verbindungen geeignet, z. B. Quarz, Turmalin, Bariumtitanat, Lithiumsulfat, Kalium(Natrium)tartrat, Ethylendiamintartrat, Ferroelektrika mit Perowskitstruktur und vor allem Blei-Zirkonium-Titanat. Bei der Verwendung von magnetischen Wechselfeldem eignen sich grundsätzlich alle ferrimagnetischen, ferromagnetischen oder super-paramagnetischen Stoffe, insbesondere die Metalle Aluminium, Kobalt, Eisen, Nickel oder deren Legierungen sowie Metalloxide vom Typ n-Maghemit (γ-Fe₂O₃), n-Magnetit (Fe₃O₄), Ferrite von der allgemeinen Formel MeFe₂O₄, wobei Me für zweiwertige Metalle aus der Gruppe Kupfer, Zink, Kobalt, Nickel, Magnesium, Calcium oder Cadmium steht.

Bei der Verwendung magnetischer Wechselfelder eignen sich insbesondere nanoskalige superparamagnetische Teilchen, sogenannte "single-domain-particle". Im Vergleich zu den vom Stand der Technik bekannten paramagnetischen Partikeln zeichnen sich die nanoskaligen Füllstoffe dadurch aus, daß solche Materialien keine Hysterese aufweisen. Dies hat zur Folge, daß die Energiedissipation nicht durch magnetische Hystereseverluste hervorgerufen wird, sondern die Wärmeerzeugung vielmehr auf eine während der Einwirkung eines elektromagnetischen Wechselfeldes induzierte Schwingung oder Rotation der Teilchen in der umgebenden Matrix und somit letztlich auf mechanische Reibungsverluste zurückzuführen ist. Dies führt zu einer besonders effektiven Erwärmungsrate der Teilchen und der sie umgebenden Matrix.

"Nanoskalige Teilchen" im Sinne der vorliegenden Erfindung sind dabei Teilchen mit einer durchschnittlichen Teilchengröße (bzw. einem durchschnittlichen Teilchendurchmesser) von nicht mehr als 200 nm, vorzugsweise nicht mehr als 50 nm und insbesondere nicht mehr als 30 nm. Dabei bedeutet Teilchengröße im Sinne dieser Definition Primärpartikelgröße. Vorzugsweise weisen die erfindungsgemäß einzusetzenden nanoskaligen Teilchen eine mittlere Teilchengröße im Bereich von 1 bis 40 nm, besonders bevorzugt zwischen 3 und 30 nm auf. Für die Ausnutzung der Effekte durch Superparamagnetismus sollen die Teilchengrößen nicht mehr als 30 nm betragen. Die Teilchengröße wird dabei bevorzugt nach der UPA-Methode (Ultrafine Particle Analyzer) bestimmt, z. B. nach dem Laser-Streulicht-Verfahren ("laser light back scattering"). Um eine Agglomeration oder ein Zusammenwachsen der nanoskaligen Teilchen zu verhindern oder zu vermeiden, sind diese üblicherweise oberflächenmodifiziert bzw. oberflächenbeschichtet. Ein derartiges Verfahren zur Herstellung agglomeratfreier nanoskaliger Teilchen ist am Beispiel von Eisenoxidteilchen in der DE-A-196 14 136 in den Spalten 8 bis 10 angegeben. Einige Möglichkeiten zur oberflächlichen Beschichtung derartiger nanoskaliger Teilchen zur Vermeidung einer Agglomeration sind in der DE-A-197 26 282 angegeben.

Der Primer wird entweder aus Lösung oder aus Dispersion auf mindestens ein Substrat aufgetragen, er kann jedoch auch aus der Schmelze als dünne Schicht auf mindestens ein Substrat aufgetragen werden.

Als Bindemittelmatrix für die erfindungsgemäß mitzuverwendenden Klebstoffe können im Prinzip alle für Klebstoffe geeignete Polymere eingesetzt werden. Beispielhaft erwähnt seien für die thermoplastisch erweichbaren Klebstoffe die Schmelzklebstoffe auf der Basis von Ethylen-Vinylacetatcopolymeren, Polybutene, Styrol-Isopren-Styrol bzw. Styrol-Butadien-Styrolcopolymere, thermoplastische Elastomere, amorphe Polyolefine, lineare, thermoplastische Polyurethane, Copolyester, Polyamidharze, Polyamid/EVA-Copolymere, Polyaminoamide auf Basis von Dimerfettsäuren, Polyesteramide oder Polyetheramide. Weiterhin eignen sich prinzipiell die bekannten Reaktionsklebstoffe auf der Basis ein- bzw. zweikomponentiger Polyurethane, ein- oder zweikomponentiger Polyepoxide, Silikonpolymere (ein- bzw. zweikomponentig), silanmodifizierte Polymere, wie sie beispielsweise bei G. Habenicht, "Kleben: Grundlagen, Technologie, Anwendungen", 3. Auflage, 1997 im Kapitel 2.3.4.4 beschrieben werden. Die (Meth)acrylat-funktionellen Reaktionskleber auf der Basis peroxidischer Härter, anaerober Härtungsmechanismen, aerober Härtungsmechanismen oder UV-Härtungsmechanismen eignen sich ebenfalls als Klebstoffmatrix. Konkrete Beispiele für den Einbau thermisch labiler Gruppen in Reaktionsklebstoffe zum Ziel der späteren Spaltung dieser Bindungen sind die Klebstoffe gemäß WO 99/07774, bei denen zumindest eine Aufbaukomponente Di- oder Polysulfidbindungen enthält. In einer besonders bevorzugten Ausführungsform können diese Klebstoffe noch feste Spaltungsreagenzien in kristalliner, verkapselter, chemisch blockierter, topologisch oder sterisch inaktivierter oder kinetisch gehemmter, fein dispergierter Form enthalten, wie sie in der noch unveröffentlichten DE-A-199 04 835.5 auf den Seiten 14 bis 16 offenbart werden. Eine andere Möglichkeit ist die Verwendung von Polyurethanklebstoffen, die als Spaltungsagenz die in der noch unveröffentlichten DE-A-198 32 629.7 offenbarten aminischen Derivate enthalten. Die in den beiden vorgenannten Schriften offenbarten Spaltungsagenzien sind ausdrücklich Bestandteil der vorliegenden Erfindung.

Als Energie zur Erwärmung der nanoskalige Teilchen enthaltenden Klebstoffe eignet sich prinzipiell jedes höherfrequente elektromagnetische Wechselfeld: so lassen sich beispielsweise elektromagnetische Strahlungen der sog. ISM-Bereiche (industrial, scientific and medical application) einsetzen, nähere Angaben hierzu finden sich unter anderem bei Kirk-Othmer, "Encyclopedia of Chemical Technology", 3. Auflage, Band 15, Kapitel "Microwave technology".

Es war bereits weiter oben darauf hinwiesen worden, daß bei der Verwendung von nanoskaligen Teilchen im Sinne dieser Erfindung die elektromagnetische Strahlung in besonders effektiver Weise ausgenutzt werden kann. Dies zeigt sich besonders deutlich daran, daß bereits im sehr niederfrequenten Bereich von etwa 50 kHz oder 100 kHz bis hinauf zu 100 MHz nahezu jede Frequenz verwendet werden kann, um eine zur Spaltung der Klebeverbindungsmatrix notwendige Wärmemenge in der Klebstoffmatrix zu erzeugen. Die Auswahl der Frequenz kann sich dabei nach den zur Verfügung stehenden Geräten und verwendeten Signalempfängern richten, wobei selbstverständlich dafür Sorge getragen werden muß, daß Störfelder nicht abgestrahlt werden.

Nachfolgend soll die Erfindung anhand einiger Prinzipversuche dargestellt werden, wobei die Auswahl der Beispiele keine Beschränkungen des Umfanges des Erfindungsgegenstandes darstellen soll, sie zeigen nur in modellhafter Weise die Wirkungsweise der erfindungsgemäßen Klebstoffzusammensetzungen.

### Beispiele:

Ein kommerziell erhältlicher PU-basierter lösemittelhaltiger Primer der Fa. Bayer (Desmocoll 500, 15%ig in Aceton/Essigsäureethylester) wurde mit nanoskaligen Magnetitpartikeln (Primärpartikelgröße 20 nm) modifiziert. Der Einfluß der Partikelgröße auf die Eignung als Signalempfänger ist in der noch unveröffentlichten DE-19924138.4 beschrieben und ist ausdrücklich Bestandteil dieser Anmeldung. Der Anteil der Magnetitpartikel wurde so variiert, daß die getrockneten Primerschichten einen Gewichtsanteil von 20% bzw. 50% energieabsorbierender Partikel aufwiesen.

Der wie oben beschrieben modifizierte Primer wurde mit Hilfe eines Rakels auf unterschiedliche nichtmetallische Klebesubstrate aufgebracht. Die Schichtdicke der getrockneten Primerschicht wurde auf 100 µm eingestellt. Nach vollständigem Trocknen des Primersystems wurden die Substrate mit einem Polyamid-basierten Schmelzklebstoff (Macromelt TPX22413, Wärmestandfestigkeit 160°C) verklebt. In unterschiedlichen Versuchsreihen wurden Verbunde mit ein- bzw. zweiseitiger Primerbeschichtung untersucht. Nach vollständiger Aushärtung des Klebstoffschicht wurden die Klebeeigenschaften der Verbunde untersucht. Dabei erfolgte die Bestimmung der Zugscherfestigkeit (ZSF) in Anlehnung an die DIN 53283. Hierzu wurden Probekörper aus dem jeweiligen Substratmaterial (PVC, ABS, PC) mit den Maßen 100 x 25 x 4 mm auf einer Fläche von 20 x 25 mm verklebt und nach etwa 24 Stunden im Zugversuch (Zwick Universalprüfmaschine 144501) untersucht. Die Ergebnisse der Untersuchungen sind Tabelle 1 bzw. Tabelle 2 zu entnehmen.

**Tabelle 1:**

| Klebeeigenschaften untersuchter Probekörper ohne bzw. mit einseitiger Primerbeschichtung | | | |
|---|---|---|---|
| Prüfkörper Material | Zugscherfestigkeit [N/mm²] ohne Primer | Primermodifizierung [Gew.%] Magnetit | Zugscherfestigkeit [N/mm²] |
| PVC | MB | 50 | MB |
| | | 20 | 3,5 |
| PC | 1,62 | 50 | 0,87 |
| | | 20 | 1,72 |
| ABS | 2,55 | 50 | 1,66 |
| | | 20 | 2,4 |
| (MB=Materialbruch) | | | |

**Tabelle 2:**

| Klebeeigenschaften untersuchter Probekörper ohne bzw. mit zweiseitiger Primerbeschichtung | | | |
|---|---|---|---|
| Prüfkörper Material | Zugscherfestigkeit [N/mm²] ohne Primer | Primermodifizierung [Gew.%] Magnetit | Zugscherfestigkeit [N/mm²] |
| PVC | 4,7 (MB) | 50 | 3,32 |
| | | 20 | 3,21 |
| PC | 1,62 | 50 | 2,94 |
| | | 20 | 3,01 |
| ABS | 2,55 | 50 | 2,66 |
| | | 20 | 2,98 |
| (MB=Materialbruch) | | | |

Die Untersuchungen bezüglich der Entklebbarkeit derartiger Verbunde wurden mit Hilfe eines HF-Generators der Fa. Hüttinger durchgeführt. Als induktor diente eine 4-windige Spule mit einem Durchmesser von 3,5 cm. Die Arbeitsfrequenz des Generators betrug 1,8 MHz, die Leitung 5 kW. Die Verbunde wurden senkrecht unter einer Zug-Scherbelastung von 0,4 MPa in die Spule eingehangen. Die gemessenen Entklebezeiten, das heißt, die bis zur Trennung des Verbundes benötigte Zeit, in der das magnetische Wechselfeld appliziert wurde, sind in Tabelle 3 bzw. Tabelle 4 zusammengefaßt.

**Tabelle 3:**

| Entklebezeiten untersuchter Klebeverbunde im magnetischen Wechselfeld bei einseitiger Primerbeschichtung | | |
|---|---|---|
| Prüfkörper Material | Primermodifizierung [Gew.%] Magnetit | Zerreißzeit [s] |
| PVC | 50 | 14 |
| | 20 | 5 |
| PC | 50 | <1 |
| | 20 | <1 |
| ABS | 50 | <1 |
| | 20 | 1,4 |

**Tabelle 4:**

| Entklebezeiten untersuchter Klebeverbunde im magnetischen Wechselfeld bei zweiseitiger Primerbeschichtung | | |
|---|---|---|
| Prüfkörper Material | Primermodifizierung [Gew.%] Magnetit | Zerreißzeit [s] |
| PVC | 50 | <1 |
| | 20 | 4 |
| PC | 50 | 10 |
| | 20 | 3,4 |
| ABS | 50 | <1 |
| | 20 | 5 |

Bei sämtlichen untersuchten Klebeverbunden wurde eine quasi-adhäsive Trennung des Verbundes beobachtet, d.h. daß bei einseitiger Primerbeschichtung der Klebstoff quasi vollständig auf dem nicht mit Primer beschichteten Substrat verbleibt. Bei den Beispielen mit beidseitiger Primerbeschichtung wurde die Adhäsion der Klebstoffschicht zu beiden anliegenden Primerschichten soweit erniedrigt, daß eine sehr leichte manuelle Abtrennung der nicht-erwärmten Klebstoffschicht möglich ist.

## Patentansprüche

1. Elektromagnetisch aktivierbare Primerzusammensetzung, **dadurch gekennzeichnet, daß** das Bindemittel zusätzlich nanoskalige Teilchen mit ferromagnetischen, ferrimagnetischen, superparamagnetischen oder piezoelektrischen Eigenschaften enthält.

2. Zusammensetzung nach Anspruch 1, **dadurch gekennzeichnet, daß** die nanoskaligen Teilchen eine durchschnittliche Teilchengröße von kleiner oder gleich 200 nm, vorzugsweise kleiner/gleich 100 nm und besonders bevorzugt kleiner/gleich 50 nm haben.

3. Zusammensetzung nach Anspruch 1 oder 2, **dadurch gekennzeichnet, daß** die nanoskaligen Teilchen aus piezoelektrischen Stoffen ausgewählt aus Quarz, Turmalin, Bariumtitanat, Lithiumsuffat, Kaliumtartrat, Natriumtartrat, Kalium-Natriumtartrat, Ethylendiamintartrat, ferroelektrischen Verbindungen mit Perowskitstruktur oder Blei-Zirkonium-Titanat aufgebaut sind.

4. Zusammensetzung nach Anspruch 1 oder 2, **dadurch gekennzeichnet, daß** die nanoskaligen Teilchen aus ferrimagnetischen, ferromagnetischen oder superparamagnetischen Stoffen ausgewählt werden aus Aluminium, Cobalt, Eisen, Nickel oder deren Legierungen, Metalloxiden vom Typ des n-Maghemits (γ-Fe₂O₃), n-Magnetits (Fe₃O₄) oder der Ferrite vom Typ des MeFe₂O₄, wobei Me ein zweiwertiges Metall ausgewählt aus Mangan, Kupfer, Zink, Cobalt, Nickel, Magnesium, Calcium, Cadmium ist.

5. Zusammensetzung, **dadurch gekennzeichnet, daß** sie die nanoskaligen Stoffe nach mindestens einem der vorhergehenden Ansprüche in einer Menge von 1 bis 30 Gew.%, vorzugsweise von 2 bis 20 Gew.% bezogen auf die Gesamtzusammensetzung enthält.

6. Lösbare Klebeverbindung, bei der die kraftschlüssige Verbindung der miteinander verbundenen Teile mit einen zwischen den Teilen eingebrachten Verbund aus Primerschicht und Klebstoffschicht bewirkt wird, **dadurch gekennzeichnet, daß** die Primermatrix nanoskalige Teilchen gemäß Anspruch1 bis 5 enthält.

7. Verfahren zum Lösen von Klebeverbindungen, **dadurch gekennzeichnet, daß** die Klebefuge, enthaltend einen Klebstoff sowie eine Primerschicht nach Anspruch 1 bis 5, einem elektrischen, magnetischen oder elektromagnetischen Wechselfeld ausgesetzt wird, wobei die Primerschicht sich lokal erwärmt und dabei
• bei thermoplastischen Klebstoffen deren Grenzschicht zum Primer über den Erweichungspunkt des thermoplastischen Bindemittels erwärmt
• bei duroplastischen Klebstoffen deren Grenzschicht zum Primer auf eine Temperatur erwärmt, die eine Rückspaltung der vemetzten Struktur der Bindemittelmatrix bewirkt,
so daß - gegebenenfalls unter mechanischer Belastung - die verklebten Substrate voneinander getrennt werden können.

8. Bauteile, die unter Mitverwendung eines Primers nach Anspruch 1 bis 5 verklebt wurden.

## Claims

1. An electromagnetically activatable primer composition, wherein the binder contains additional nanoscale particles with ferromagnetic, ferrimagnetic, superparamagnetic or piezoelectric properties.

2. A composition as claimed in claim 1, wherein the nanoscale particles have an average particle size of less than or equal to 200 nm, preferably less than or equal to 100 nm and particularly preferably less than or equal to 50 nm.

3. A composition as claimed in claim 1 or 2, wherein the nanoscale particles are built up from piezoelectric substances selected from quartz, tourmaline, barium titanate, lithium sulfate, potassium tartrate, sodium tartrate, potassium sodium tartrate, ethylenediamine tartrate, ferroelectric compounds with a Perovskite structure or lead zirconium titanate.

4. A composition as claimed in claim 1 or 2, wherein the nanoscale particles of ferrimagnetic, ferromagnetic or superparamagnetic substances are selected from aluminum, cobalt, iron, nickel or their alloys, metal oxides of the n-maghemite (γ-Fe₂O₃) or n-magnetite (Fe₃O₄) type or ferrites of the MeFe₂O₄ type, wherein Me represents a divalent metal selected from manganese, copper, zinc, cobalt, nickel, magnesium, calcium and cadmium.

5. A composition as claimed in at least one of the preceding claims, wherein the nanoscale substance is present in an amount of 1 to 30 wt.%, preferably 2 to 20 wt.%, based on the total composition.

6. A separable bonded joint in which friction-tight bonding of the parts bonded together is brought about by using a bonded joint of primer layer and adhesive layer between the parts, wherein the primer matrix contains nanoscale particles as claimed in any of claims 1 to 5.

7. A process for loosening adhesive bonds, wherein the adhesive bond, containing an adhesive and a primer layer as claimed in any of claims 1 to 5, is subjected to an alternating electric, magnetic or electromagnetic field, wherein the primer layer is locally heated and then
• in the case of thermoplastic adhesives, the boundary layer adjacent to the primer is heated to above the softening point of the thermoplastic binder,
• in the case of thermoset adhesives, the boundary layer adjacent to the primer is heated to a temperature which causes breaking up of the cross-linked structure in the binder matrix,
so that, optionally with the application of mechanical stress, the bonded substrates can be separated one from the other.

8. Structural parts which have been bonded using a primer as claimed in any of claims 1 to 5.

## Revendications

1. Composition d'apprêt activable par un moyen électromagnétique, **caractérisée en ce que** le liant contient en outre des particules à l'échelle nanométrique ayant des propriétés ferromagnétiques, ferrimagnétiques, super-paramagnétiques ou piézoélectriques.

2. Composition selon la revendication 1, **caractérisée en ce que** les particules à l'échelle nanométrique ont une granulométrie moyenne inférieure ou égale à 200 nm, de préférence inférieure/égale à 100 nm et de façon particulière inférieure/égale à 50 nm.

3. Composition selon la revendication 1 ou 2, **caractérisée en ce que** les particules à l'échelle nanométrique sont constituées de matières piézoélectriques choisies parmi le quartz, la tourmaline, le titanate de baryum, le sulfate de lithium, le tartrate de potassium, le tartrate de sodium, le tartrate de potassium-sodium, le tartrate d'éthylènediamine, des composés ferroélectriques à structure de perowskite ou le titanate de plomb-zirconium.

4. Composition selon la revendication 1 ou 2, **caractérisée en ce que** les particules à l'échelle nanométrique en matériaux ferrimagnétiques, ferromagnétiques ou super-paramagnétiques choisis parmi l'aluminium, le cobalt, le fer, le nickel ou leurs alliages, les oxydes métalliques du type de la n-maghémite (γ-Fe₂O₃), de la n-magnétite (Fe₃O₄) ou des ferrites du type de MeFe₂O₄ , Me étant un métal bivalent choisi parmi le manganèse, le cuivre, le zinc, le cobalt, le nickel, le magnésium, le calcium, le cadmium.

5. Composition **caractérisée en ce qu'**elle contient des substances à l'échelle nanométrique selon au moins une des revendications précédentes en une quantité de 1 à 30% en poids, de préférence de 2 à 20% en poids par rapport à l'ensemble de la composition.

6. Assemblage adhésif détachable, dans lequel la liaison par la force des pièces assemblées entre elles est produite par une combinaison de couche d'apprêt et de couche adhésive appliquée entre les pièces, **caractérisé en ce que** la matrice d'apprêt contient des particules à l'échelle nanométrique selon les revendications 1 à 5.

7. Procédé de désassemblage de liaisons par adhésion, **caractérisé en ce que** le joint adhésif, contenant une colle ainsi qu'une couche d'apprêt selon les revendications 1 à 5, est soumis à un champ alternatif électrique, magnétique ou électromagnétique, la couche d'apprêt se réchauffant localement et
• dans les colles thermoplastiques, la couche limite avec l'apprêt se réchauffe au dessus du point de ramollissement du liant thermoplastique ;
• dans les colles thermodurcissables, la couche limite avec l'amorce se réchauffe à une température qui produit une redissociation de la structure réticulée de la matrice de liant,
si bien que - le cas échéant sous sollicitation mécanique - les substrats collés peuvent être séparés l'un de l'autre.

8. Eléments de construction qui sont collés en utilisant simultanément un apprêt selon les revendications 1 à 5.
